# EUROPEAN PATENT SPECIFICATION

(11) **EP 0 634 740 B1**
(45) Date of publication and mention of the grant of the patent: **22.09.1999**
(21) Application number: 94304883.5
(22) Date of filing: 04.07.1994
(51) Int. Cl.: G11B 5/39

(54) **Magnetoresistive read transducer**
Magnetoresistiver Lesewandler
Transducteur magnétorésistif de lecture

(30) Priority: 13.07.1993 US 90714
(43) Date of publication of application: 18.01.1995
(73) Proprietor: International Business Machines Corporation, Armonk, N.Y. 10504 (US)
(72) Inventor: Chen, Mao-Min, San Jose, California 95120 (US); Fontana, Robert Edward, San Jose, California 95120 (US); Krounbi, Mohamad Towfik, San Jose, California 95120 (US); Kung, Kenneth Ting-Yuan, San Jose, California 95120 (US); Lee, James Hsi-Tang, San Jose, California 95120 (US); Lo, Jyh-Shliey Jerry, San Jose, California 95120 (US); Tsang, Ching Hwa, Sunnyvale, California 94087 (US); Wang, Po-Kang, San Jose, California 95120 (US)
(74) Representative: Bailey, Geoffrey Alan

(56) References cited:
- EP-A- 0 279 536
- EP-A- 0 298 417
- EP-A- 0 422 806
- EP-A- 0 441 581
- EP-A- 0 558 237
- PATENT ABSTRACTS OF JAPAN vol. 013 no. 162 (P-859) ,19 April 1989 & JP-A-64 001112 (HITACHI LTD) 5 January 1989,

## Description

The present invention relates generally to thin film magnetic transducers and, more particularly, to magnetic transducers having a magnetoresistive read transducer arranged such that a longitudinal bias field is produced in end regions of the transducer.

The use of magnetoresistive (MR) sensors to sense magnetically recorded data is well-known in the art. It is also well-known that both longitudinal and transverse bias fields must be provided in the MR sensing element to eliminate Barkhausen noise and to maintain the sensor in its most linear operating range. Commonly assigned U.S. Patents Nos. 4,024,489; 3,840,898 and 4,103,415 discuss and disclose MR sensors in which various biasing schemes utilizing both hard or soft magnetic materials and/or exchange coupling provide the transverse and longitudinal magnetic bias fields required in the MR element.

It has become increasingly difficult to fabricate MR read transducers in the small physical size required to read data recorded on ever decreasing track widths at ever increasing linear recording density. One solution proposed to meet these requirements is described in commonly assigned U.S. Patent No. 4,663,685 in which a transverse bias field is produced in only a central active region of the MR sensor element and a longitudinal bias field is produced in the inactive end regions by means of exchange coupling between the portions of the ferromagnetic MR element which extends into the end regions and layers of antiferromagnetic material which extend only over the end regions of the MR element. U.S. Patent No. 4,639,806 discloses an MR sensor which provides a longitudinal bias field produced by ferromagnetic exchange coupling between the MR layer and hard magnetic layers in the sensor end regions only. Commonly assigned U.S. Patent No. 5,079,035 discloses an MR sensor in which the ferromagnetic MR element extends over only the central active region of the sensor. A layer of hard magnetic material is provided in each of the sensor end regions which form an abutting junction with the ends of the HR element to provide a longitudinal magnetic bias field in the sensor. The central active region includes the MR element, a non-magnetic spacer layer and an adjacent soft magnetic layer which provides a transverse magnetic bias field for the sensor.

The MR sensor design described in patent no. 5,079,035 has been shown to meet present requirements and provides numerous advantages, including data track definition by a single photolithography process step, controllable and reproducible etch stop of the sensor active region trilayer etch process, easily adjustable longitudinal bias field, and substantially no side reading. However, the contiguous or abutting junction hard bias design suffers from a substantial disadvantage which, while at large data track widths where the length of the sensor active region is large compared to the length of the junction region may not be discernible, at relatively small data track widths where the length of the active region can become comparable or even small compared to the length of the junction region, can cause the magnetic properties in the junction region to no longer be predictable or well-defined. As a result, under transverse field excitation, hysteresis can be introduced into the sensor's response. In addition, the magnetization of a cobalt (Co) alloy hard ferromagnetic material, when grown on different substrates such as the trilayer active region of the sensor at the overlapping junction region, causes a majority of the Co c-axes to be oriented perpendicular to the film plane. Thus after initialization with a longitudinal magnetic field, such a hard ferromagnetic layer will have substantially no remnant magnetization, and the magnitude of the longitudinal bias field thus produced can be insufficient to ensure a single domain state in the sensor.

European Patent Application 0 558 237 discloses a magnetoresistive read transducer and a method of manufacture of a magnetoresistive read transducer. The abutting junction between the end regions and the central regions forms a straight edge, that is, the magnetoresistive element and the bias layer do not overlap. This application is part of the state of the art by virtue of Art.54(3).

It is therefore an object of the present invention to provide an improved MR read transducer in which the magnetic instabilities at the junction between the MR layer and the magnetic bias layer are reduced.

Accordingly the present invention provides a method for manufacturing a magnetoresistive read transducer having end regions separated by a central active region, the method comprising the steps of: depositing on a substrate a magnetoresistive layer of ferromagnetic material over at least the central active region of said transducer; forming a stencil covering said central active region of said transducer; etching away the portion of said magnetoresistive layer not covered by said stencil to form a magnetoresistive element extending over said central active region of said transducer; depositing a second layer of ferromagnetic material over regions of said transducer not covered by said stencil; and depositing a layer of antiferromagnetic material over regions of said transducer not covered by said stencil, said layer of antiferromagnetic material overlaying and being in contact with said second layer of ferromagnetic material, said layers of antiferromagnetic and ferromagnetic material forming an exchange-coupled bias layer extending over said end regions of said transducer; removing said stencil covering said central active region; said exchange-coupled bias layer in each cf said end regions forming an abutting junction with one end of said magnetoresistive element, and producing a longitudinal magnetic bias field in said transducer; and wherein said abutting junction comprises overlapping tapered portions of said magnetoresistive element and said bias layer.

The invention also provides a magnetoresistive read transducer having end regions separated by a central active region, the transducer comprising a magnetoresistive layer of ferromagnetic material extending over substantially only said central active region; a second layer of ferromagnetic material extending over substantially only said end regions of said transducer; and a layer of antiferromagnetic material overlaying and in contact with said second layer of ferromagnetic material, said layers of antiferromagnetic and ferromagnetic material forming an exchange-coupled bias layer extending over said end regions of said transducer; said exchange-coupled bias layer in each of said end regions forming an abutting junction with one end of said magnetoresistive layer, and producing a longitudinal magnetic bias field in said transducer; and wherein said abutting junction comprises overlapping tapered portions of said magnetoresistive layer and said bias layer.

The invention further provides a magnetic storage system comprising: a magnetic storage medium having a plurality of tracks for recording of data; a magnetoresistive read transducer maintained in a closely spaced position relative to said magnetic storage medium during relative motion between said magnetoresistive read transducer and said magnetic storage medium; actuator means coupled to said magnetoresistive read transducer for moving said magnetoresistive read transducer to selected tracks on said magnetic storage medium; and detection means coupled to said magnetoresistive read transducer for detecting resistance changes in the magnetoresistive material responsive to magnetic fields representative of data bits recorded in said magnetic storage medium intercepted by said magnetoresistive transducer; wherein the magnetoresistive read transducer is a transducer as described above.

The present invention will be described further, by way of example only, with reference to a preferred embodiment thereof as illustrated in the accompanying drawings, in which:
Figure 1 is a simplified block diagram of a magnetic disk storage system according to an embodiment of the present invention;
Figure 2 is a cross-sectional view of a prior art magnetoresistive read transducer in which longitudinal bias is provided by bias layers formed in the transducer end regions only;
Figure 3 is a conceptual cross sectional view of an MR read transducer according to the principles of the present invention;
Figures 4a-4d is a diagram illustrating a specific embodiment of a process for fabricating a contiguous junction MR transducer according to the principles of the present invention;
Figure 5 is an exploded diagram illustrating in greater detail the formation of the contiguous junction according to a preferred embodiment of the present invention;
Figure 6 is a cross-sectional view of a preferred embodiment of an MR read transducer produced in accordance with the process illustrated in Figures 4 and 5; and
Figure 7 is a cross-sectional view of a second preferred embodiment of an MR read transducer produced in accordance with the process illustrated in Figures 4 and 5.

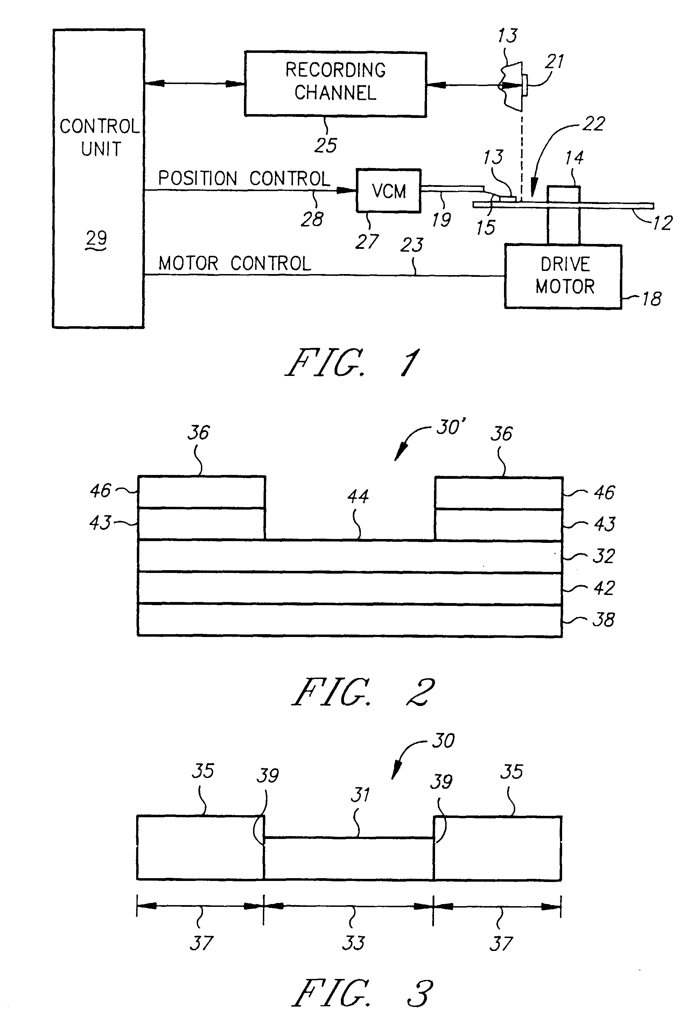

Referring now to Fig. 1, although the invention is described as embodied in a magnetic disk storage system as shown in Fig. 1, it will be apparent that the invention is also applicable to other magnetic recording systems such as a magnetic tape recording system, for example. At least one rotatable magnetic disk 12 is supported on a spindle 14 and rotated by a disk drive motor 18. The magnetic recording media on each disk is in the form of an annular pattern of concentric data tracks (not shown) on disk 12.

At least one slider 13 is positioned on the disk 12, each slider 13 supporting one or more magnetic read/write transducers 21, typically referred to as read/write heads. As the disks rotate, the sliders 13 are moved radially in and out over the disk surface 22 so that the heads 21 may access different portions of the disk where desired data is recorded. Each slider 13 is attached to an actuator arm 19 by means of a suspension 15. The suspension 15 provides a slight spring force which biases the slider 13 against the disk surface 22. Each actuator arm 19 is attached to an actuator means 27. The actuator means as shown in Fig.1 may be a voice coil motor (VCM), for example. The VCM comprises a coil moveable within a fixed magnetic field, the direction and velocity of the coil movements being controlled by the motor current signals supplied by a controller.

During operation of the disk storage system, the rotation of the disk 12 generates an air bearing between the slider 13 and the disk surface 22 which exerts an upward force or lift on the slider. The air bearing thus counterbalances the slight spring force of the suspension 15 and supports the slider 13 off and slightly above the disk surface by a small, substantially constant spacing during operation.

The various components of the disk storage system are controlled in operation by control signals generated by control unit 29, such as access control signals and internal clock signals. Typically, the control unit 29 comprises logic control circuits, storage means and a microprocessor, for example. The control unit 29 generates control signals to control various system operations such as drive motor control signals on line 23 and head position and seek control signals on line 28. The control signals on line 28 provide the desired current profiles to optimally move and position a selected slider 13 to the desired data track on the associated disk 12. Read and write signals are communicated to and from read/write heads 21 by means of recording channel 25.

The above description of a typical magnetic disk storage system, and the accompanying illustration of Fig. 1 are for representation purposes only. It should be apparent that disk storage systems may contain a large number of disks and actuators, and each actuator may support a number of sliders.

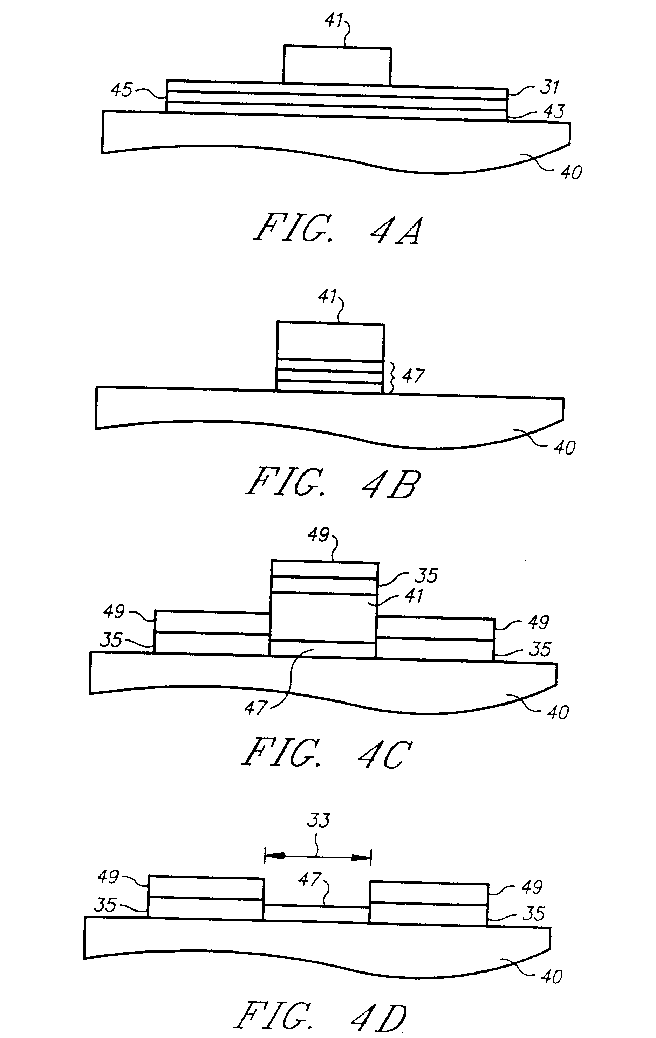

Referring now to Fig. 2, a prior art MR read transducer of the type described in commonly assigned U.S. Patent No. 4,663,685 comprises an MR layer 32 which extends over the entire transducer 30'. A longitudinal bias layer 43 extends over the transducer end regions 36 only to produce a longitudinal bias field in the transducer. A layer 38 of soft magnetic material, separated from the MR layer 32 by a thin non-magnetic spacer layer 42, produces a transverse magnetic bias field in at least a portion of a central active region 44 of the transducer 30'. The read signal is sensed over the central active region 44 which is defined in transducer 30' by the spacing between lead conductors 46 deposited over the longitudinal bias layer 43.

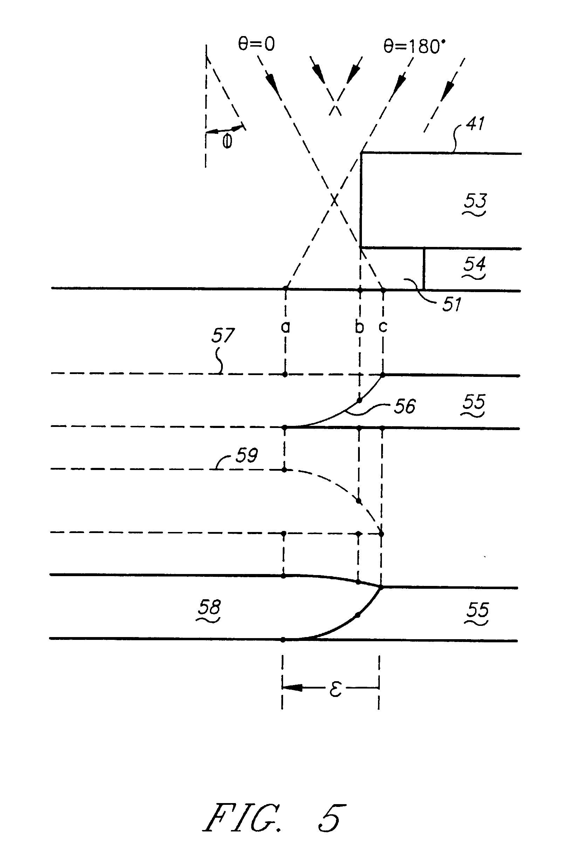

Referring now to Fig. 3, a conceptual view of a magnetoresistive (MR) read transducer according to the present invention is shown. The MR read transducer 30 comprises a layer of ferromagnetic material forming an MR element 31 which extends over substantially only a central active region 33 of the transducer and a magnetic bias layer 35 formed in each end region 37 which forms an abutting junction 39 with the MR element 31 to produce a longitudinal magnetic bias field in the MR read transducer 30. Since the MR element 31 extends only over the central active region 33 of the transducer 30, additional side-reading suppression components are not required in this preferred embodiment. Thus, the longitudinal bias layer 35 in each end region 37 need only provide for electrical and magnetic continuity to the MR element 31. The longitudinal bias layer 35 may be a single layer of magnetically hard material such as cobalt-chromium (CoCr), cobalt-platinum (CoPt) or cobalt-chromium-platinum (CoCrPt), for example, although the use of under- and/or overcoats such as tungsten (W) or gold (Au) may be desirable. Alternatively, the longitudinal bias field can be provided by ferromagnetic/antiferromagnetic exchange coupling wherein the longitudinal bias layer 35 comprises a layer 75 of antiferromagnetic material overlaying and in physical contact with a layer 79 of ferromagnetic material (as shown in Fig. 7). For example, the longitudinal bias layer 35 can comprise a bilayer of manganeseiron/nickel-iron (MnFe/NiFe) or a bilayer of manganese-nickel/nickel-iron (MnNi/NiFe). As is known in the art, a transverse magnetic bias field is also required in the central active region 33. The transverse bias field can be provided by an adjacent soft magnetic layer, shunt bias, or other compatible transverse bias techniques. For simplicity, the transverse bias structure has not been shown in the conceptual view of Fig. 3.

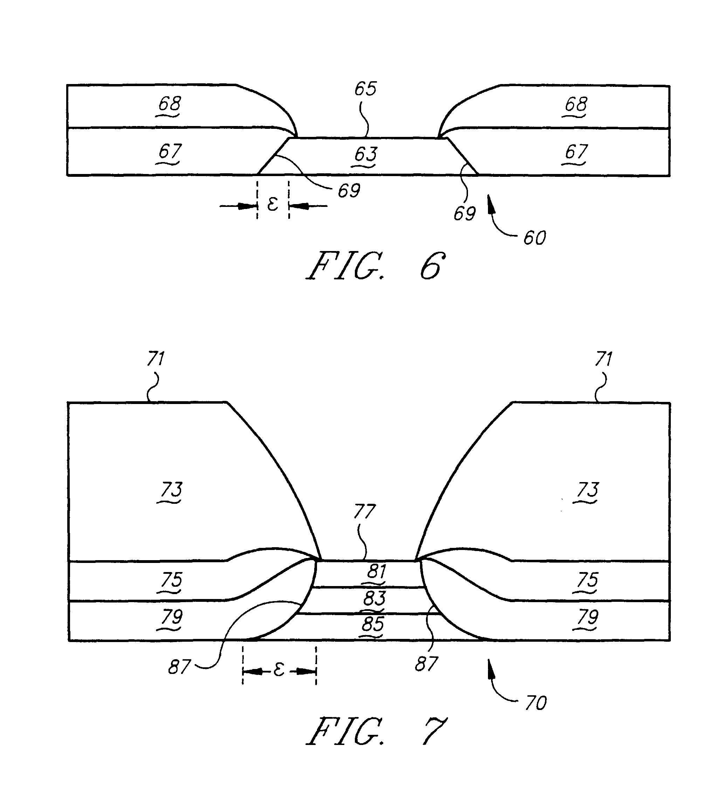

Referring now also to Figs. 4a-4d, a preferred embodiment of a process for fabricating a suitable abutting or contiguous junction between the MR element 31 and the longitudinal bias layer 35 is illustrated. The process according to the preferred embodiment of the present invention comprises the steps of depositing, upon a suitable substrate 40, an MR layer of ferromagnetic material such as NiFe, for example, over the length of the transducer. In the embodiment shown, a transverse bias structure comprising a soft magnetic layer 43 and a non-magnetic spacer layer 45 are deposited on substrate 40 prior to depositing of the MR layer 31. The process then continues by depositing a layer of a suitable material such as a photoresist, and patterning the photoresist material to form a stencil 41 (Fig. 4a). Stencil 41 is used to define each edge of the MR layer 31 as the layer of MR material 31 as well as the spacer layer 45 and the soft magnetic layer 43 are subjected to a subtractive process such as sputter etching, ion milling or chemical etching to produce an MR trilayer structure 47 (Fig. 4b). The material for the longitudinal bias layers 35 is then deposited as stencil 41 again defines the edges of the bias layers 35 (Fig. 4c). Using the same stencil 41, a layer of conductive material is then deposited to produce the sensor conductor leads 49. If desired, conductor leads 49 can be deposited in a later step if the conductor leads 49 are not coextensive with the longitudinal bias layers 35. Note that a quantity of magnetic material and lead material is also deposited on the top surface of stencil 41. However, this quantity of material is removed, along with stencil 41 in a lift-off process (Fig. 4d) as is known in the art to produce an MR sensor or transducer having longitudinal bias layers 35 in the end regions only, each having a contiguous, abutting junction with the MR trilayer structure 47 which extends over only the central active region 33.

Although a vertical, square butted junction between the MR trilayer 47 and the longitudinal bias layer 35 is shown conceptually in Figs. 3 and 4, the preferred embodiments comprise a junction in which the topography is well-controlled so that a desired junction configuration can be easily and reliably produced.

Referring now also to Fig. 5, the formation of the contiguous junction according to an embodiment of the present invention is illustrated in greater detail. In the embodiment shown in Fig. 5, the stencil 41 comprises a bi-layer resist formed by a relatively thin underlayer 54 and a thick imaging layer 53. One exposure and one develop step defines the edge profile of the resist. An undercut 51 is created by dissolution of the underlayer 54 in a suitable developer with the undercut distance determined by the develop time.

The unmasked areas of the layer 55 of MR material are then removed by the use of a unidirectional process such as ion milling, for example. The angle of incidence Φ is controlled by suitably tilting the substrate relative to the incident beam. In addition, circular symmetry is obtained by rotating the substrate so that any given point sees the incident beam rotate conically about the azimuth angle θ except near the stencil 41 whose edge shadows the layer 55 during some segment of substrate revolution. As shown in Fig. 5, for an azimuth angle of 0 degrees, there is exposure of the layer 55 to point c and the exposure limit point moves progressively to the left until at an azimuth angle of 180 degrees the exposure limit point is moved to point a. The combined milling for this embodiment produces a curved taper 56 as a result of the removal during the milling process of the portion 57 of the layer 55 shown in the dashed lines.

The longitudinal bias layer 58 is then deposited, by sputter deposition, for example, during a similar orientation and rotation of the substrate to produce a deposition profile such as that shown by dashed lines 59. The combined junction profile resulting from the deposition of bias layer 58 is shown in full line. Still using the same stencil 41, conductor leads 73 (as shown in Fig. 7) can also be deposited in this sequence of steps. Although the longitudinal bias layer 58 is shown as a single layer in Fig. 5, it will be recognized that the longitudinal bias layer may comprise multilayers, such as a layer of ferromagnetic material overlaid by a layer of antiferromagnetic material to provide a longitudinal bias field by ferromagnetic/antiferromagnetic exchange coupling, for example. Similarly, the MR layer 55 may comprise multiple layers, such as the MR trilayer 47 forming a transverse bias structure, for example.

The junction profile 62 comprises two overlapping tapers. The taper profile is determined by the height of the stencil 41 and the selected angle of incidence Φ. For electrical reliability, the length of the junction overlap ε should be relatively long; however, for magnetic reliability the length of the junction overlap ε should be relatively short. Thus, the selected length of the junction overlap is a trade off in which typically the magnetic reliability is more heavily weighted than the electrical reliability. To produce relatively short overlap lengths, overmilling at low angles of incidence Φ prior to deposition of the bias layer 58 may be required.

Referring now also to Fig. 6, a cross-sectional view of a preferred embodiment of an MR read transducer fabricated by the above-described method is shown, the surface of which is in close proximity to a magnetic recording medium from which previously recorded magnetic data is to be read. The transducer 60 comprises an MR element 63 which extends over the central active region 65 of the transducer, and hard magnetic bias layers 67 which form abutting junction 69 with the MR element 63. The hard magnetic bias layers 67 extend over the end regions 61 of the transducer to produce a longitudinal magnetic bias field in the MR element 63. In this preferred embodiment, the MR element 63 can comprise a trilayer structure including a layer of ferromagnetic material, such as NiFe, for example, a spacer layer of a nonmagnetic material, such as tantalum (Ta), for example, and a layer of soft magnetic material, such as NiFeRh, for example. The soft magnetic layer is separated from the MR layer by the spacer layer and provides the transverse bias field for the MR element 63. The hard magnetic bias layers 67 comprise a single layer of a hard magnetic material, such as CoCrPt, for example. Since in the junction region 69 where the hard magnetic material overlaps and is grown on soft ferromagnetic and nonmagnetic materials, regions of varying coercivity and magnetic instability exist, for magnetic reliability, it is necessary that the length of the overlap ε be relatively short. In a specific embodiment, the stencil 41 height was about 1 µm and the angle of incidence Φ was about 10 degrees with an overmill of 5 percent. This selected combination produced a junction length ε of less than 0.1 µm. For this particular embodiment, junction lengths within the range of 0 < ε < 0.1 µm are suitable for use with transducers utilizing hard magnetic bias layers to produce the longitudinal bias field. To ensure good electrical reliability between the MR element 63 and the bias layer 67, the undercut 51 of stencil 41 (as shown in Fig. 5) can be adjusted to provide some overlap 64 of the conductor leads 68 with the MR element 63.

Referring now also to Fig. 7, a cross-sectional view of a second embodiment of an MR read transducer 70 fabricated by the method described with reference to Fig. 5 is shown. The MR transducer 70 comprises a multilayer MR element which extends over the central active region 77 of the transducer, and a bilayer exchange coupled bias layer 75/79 deposited in each end region 71 which form abutting junctions 87 with the MR element. The bias layers 75/79 extend over the end regions 71 of the transducer to produce a longitudinal magnetic bias field in the MR element. The bias layers comprise a layer 75 of antiferromagnetic material, such as MnFe or MnNi, for example, overlaying and in contact with a layer 79 of a ferromagnetic material, such as NiFe, for example. In this preferred embodiment, the MR element comprises a trilayer structure including a layer 81 of ferromagnetic material, such as NiFe, for example, a spacer layer 83 of a nonmagnetic material, such as tantalum (Ta), for example, and a layer 85 of soft magnetic material, such as NiFeRh, for example. The soft magnetic layer 85 is separated from the MR layer 81 by the spacer layer 83 and provides the transverse bias field for the MR element. Unlike the magnetization in the hard magnetic material utilized for the bias layers in the preferred embodiment described with reference to Fig. 6, the magnetization in a ferromagnetic layer exchange-coupled to an antiferromagnetic layer will not change irreversibly, and thus will not cause any hysteric response with application of a transverse magnetic bias field. Similarly, the magnetization in a ferromagnetic/antiferromagnetic couple will not vary with the substrate on which it is grown, and thus will not diminish when grown on the overlap region ε of the junction 87. Therefore, in a transducer which employs antiferromagnetic/ferromagnetic exchange coupling to provide the longitudinal bias field, magnetic instability in the junction region is not a problem and a relatively long overlap length ε at the junction 87 can be used to ensure electrical contact and reliability. In a specific embodiment, the stencil 41 height was about 1 µm and the angle of incidence Φ was in the range of about 70 to 80 degrees. This selected combination produced a junction length ε of about 5 times the thickness of the MR element. For this particular embodiment, junction lengths ε within the range of 3 to 5 times the MR element thickness are suitable for use with transducers utilizing antiferromagnetic/ferromagnetic exchange-coupled bias layers to produce the longitudinal bias field. As described above, conductor leads 71 can be deposited in the same sequence of process steps and the MR element and the bias layers, or alternatively, can be deposited in subsequent steps.

## Claims

1. A method for manufacturing a magnetoresistive read transducer (30) having end regions (37) separated by a central active region (33), the method comprising the steps of:
depositing on a substrate (40) a magnetoresistive layer of ferromagnetic material (31) over at least the central active region of said transducer;
forming a stencil (41) covering said central active region of said transducer;
etching away the portion of said magnetoresistive layer not covered by said stencil to form a magnetoresistive element extending over said central active region of said transducer;
depositing a second layer (79) of ferromagnetic material over regions of said transducer not covered by said stencil; and
depositing a layer of antiferromagnetic material (75) over regions of said transducer not covered by said stencil, said layer of antiferromagnetic material overlaying and being in contact with said second layer of ferromagnetic material, said layers of antiferromagnetic and ferromagnetic material forming an exchange-coupled bias layer extending over said end regions of said transducer;
removing said stensil (41) covering said central active region;
said exchange-coupled bias layer in each of said end regions forming an abutting junction (87) with one end of said magnetoresistive element, and producing a longitudinal magnetic bias field in said transducer; and
wherein said abutting junction comprises overlapping tapered portions of said magnetoresistive element and said bias layer.

2. A method as claimed in claim 1 wherein the length of said overlapping junction (87) is within the range of about three to five times the thickness of said magnetoresistive element.

3. A method as claimed in any of claims 1 to 2 wherein said etch step comprises the use of a directional etching method.

4. A method as claimed in claim 3 wherein said directional etching method comprises ion beam milling.

5. A method as claimed in claim 3 or claim 4 wherein said directional etching method is carried out at an angle to said transducer (30).

6. A method as claimed in claim 5 wherein said angle is within the range of about seventy to eighty degrees.

7. A method as claimed in claim 5 or claim 6 wherein said transducer (30) is rotated in a plane normal to said angle during said etching step.

8. A method as claimed in any preceding claim wherein said stencil (41) comprises a photoresist material having a thin underlayer (54) and a thick imaging layer (53) overlaying said thin underlayer.

9. A method as claimed in claim 8 wherein said underlayer (54) is undercut.

10. A method as claimed in any preceding claim further comprising the step of depositing a layer of soft magnetic material (85) spaced from said magnetoresistive element for producing a transverse magnetic bias field in at least a portion of said central active region (33).

11. A magnetoresistive read transducer (30) having end regions (37) separated by a central active region (33), the transducer comprising a magnetoresistive layer (31) of ferromagnetic material extending over substantially only said central active region:
a second layer (79) of ferromagnetic material extending over substantially only said end regions of said transducer; and
a layer of antiferromagnetic material (75) overlaying and in contact with said second layer cf ferromagnetic material, said layers of antiferromagnetic and ferromagnetic material forming an exchange-coupled bias layer extending over said end regions of said transducer;
said exchange-coupled bias layer in each of said end regions forming an abutting junction (87) with one end of said magnetoresistive layer, and producing a longitudinal magnetic bias field in said transducer; and
wherein said abutting junction comprises overlapping tapered portions of said magnetoresistive layer and said bias layer.

12. A magnetoresistive read transducer (30) as claimed in claim 11, wherein the length of said overlapping junction (87) is within the range of about three to five times the thickness of said magnetoresistive layer.

13. A magnetoresistive read transducer (30) as claimed in claim 11 or claim 12 wherein said overlapping tapered portions comprise a ccntinuous curved surface.

14. A magnetoresistive read transducer (30) as claimed in any of claims 11 to 13 wherein said magnetoresistive layer comprises an alloy of nickel-iron.

15. A magnetoresistive read transducer (30) as claimed in any of claims 11 to 14 wherein said antiferromagnetic material (75) is selected from the group consisting of the alloys of manganese-iron and manganese-nickel, and said ferromagnetic material (79) comprises nickel-iron.

16. A magnetoresistive read transducer (30) as claimed in any of claims 11 to 15 further comprising a layer of soft magnetic material (85) spaced from said magnetoresistive layer for producing a transverse magnetic bias field in at least a portion of said central active region (33).

17. A magnetoresistive read transducer (30) as claimed in claim 16 wherein said soft magnetic material (85) comprises an alloy of nickel-iron-rhodium.

18. A magnetic storage system comprising:
a magnetic storage medium (12) having a plurality of tracks for recording of data;
a magnetoresistive read transducer (30) maintained in a closely spaced position relative to said magnetic storage medium during relative motion between said magnetoresistive read transducer and said magnetic storage medium;
actuator means (19) coupled to said magnetoresistive read transducer for moving said magnetoresistive read transducer to selected tracks on said magnetic storage medium; and
detection means (25) coupled to said magnetoresistive read transducer for detecting resistance changes in the magnetoresistive material responsive to magnetic fields representative of data bits recorded in said magnetic storage medium intercepted by said magnetoresistive transducer;
wherein the magnetoresistive read transducer is a transducer as claimed in any of claims 11 to 17.

## Patentansprüche

1. Ein Verfahren zur Herstellung eines magnetoresistiven Lesewandlers 30, dessen Endbereiche 37 durch einen aktiven Zentralbereich 33 getrennt sind, bestehend aus folgenden Schritten:
Abscheiden einer magnetoresistiven Schicht aus ferromagnetischem Material 31 auf einem Substrat 40 über mindestens dem aktiven Zentralbereich des Wandlers;
Herstellung einer Schablone 41, die den aktiven Zentralbereich des Wandlers abdeckt;
Wegätzen des nicht von der Schablone abgedeckten Teils der magnetoresistiven Schicht, um ein magnetoresistives Element zu erzeugen, das sich über den aktiven Zentralbereich des Wandlers erstreckt;
Abscheiden einer zweiten Schicht 79 aus ferromagnetischem Material über Bereichen des Wandlers, die nicht von der Schablone abgedeckt sind; und
Abscheiden einer Schicht aus antiferromagnetischem Material 75 über Bereichen des Wandlers, die nicht von der Schablone abgedeckt sind, wobei die Schicht aus antiferromagnetischem Material die zweite Schicht aus ferromagnetischem Material überdeckt und mit ihr Kontakt hat, so daß die Schichten aus antiferromagnetischem und ferromagnetischem Material eine austauschgekoppelte Vormagnetisierungsschicht bilden, die sich über die Endbereiche des Wandlers erstreckt;
Entfernen der Schablone 41, die den aktiven Zentralbereich bedeckt;
wobei die austauschgekoppelte Vormagnetisierungsschicht in jedem der Endbereiche eine Stoßverbindung 87 mit einem Ende des magnetoresistiven Elementes bildet und ein längsgerichtetes magnetisches Vormagnetisierungsfeld im Wandler erzeugt; und
wobei die Stoßverbindung überlappende, sich verjüngende Teile des magnetoresistiven Elementes und der Vormagnetisierungsschicht umfaßt.

2. Ein Verfahren nach Anspruch 1, bei dem die Länge der überlappenden Verbindung 87 zwischen dem Dreifachen und dem Fünffachen der Dicke des magnetoresistiven Elementes beträgt.

3. Ein Verfahren nach Anspruch 1 oder 2, bei dem der Ätzschritt die Verwendung eines richtungsabhängigen Ätzverfahrens umfaßt.

4. Ein Verfahren nach Anspruch 3, bei dem das richtungsabhängige Ätzverfahren die Abtragung mittels eines Ionenstrahls umfaßt.

5. Ein Verfahren nach Anspruch 3 oder 4, bei dem das richtungsabhängige Ätzverfahren in einem Winkel zum Wandler 30 ausgeführt wird.

6. Ein Verfahren nach Anspruch 5, bei dem der Winkel zwischen zirka 70 und 70 Grad beträgt.

7. Ein Verfahren nach Anspruch 5 oder 6, bei dem der Wandler 30 während des Ätzschrittes in einer Ebene gedreht wird, die senkrecht zum genannten Winkel liegt.

8. Ein Verfahren nach Anspruch 1 bis 7, bei dem die Schablone 41 aus einem Photoresistmaterial besteht, das aus einer dünne Unterschicht 54 und einer dicken Formschicht 53, die die dünne Unterschicht überdeckt, besteht.

9. Ein Verfahren nach Anspruch 8, bei dem die Unterschicht 54 unterschnitten ist.

10. Ein Verfahren nach Anspruch 1 bis 9, das außerdem einen Schritt enthält, in dem eine Schicht aus weichmagnetischem Material 55 abgeschieden wird, die von dem magnetoresistiven Element getrennt ist, um zumindest in einem Teil des aktiven Zentralbereichs 33 ein quergerichtetes Vormagnetisierungsfeld zu erzeugen.

11. Ein magnetoresistiver Lesewandler 30, dessen Endbereiche 37 durch einen aktiven Zentralbereich 33 getrennt sind, und der aus folgenden Komponenten besteht: einer magnetoresistiven Schicht 31 aus ferromagnetischem Material, die sich im wesentlichen nur über den aktiven Zentralbereich erstreckt;
einer zweiten Schicht 79 aus ferromagnetischem Material, die sich im wesentlichen nur über die Endbereiche des Wandlers erstreckt; und
einer Schicht aus antiferromagnetischem Material 75, die die zweite Schicht aus ferromagnetischem Material überdeckt und mit ihr in Kontakt hat, so daß die Schicht aus antiferromagnetischem Material und die Schicht aus ferromagnetischem Material eine austauschgekoppelte Vormagnetisierungsschicht bilden, die sich über die Endbereiche des Wandlers erstrecken;
wobei die austauschgekoppelte Vormagnetisierungsschicht in jedem der Endbereiche eine Stoßverbindung 87 mit einem Ende der magnetoresistiven Schicht bildet; und
wobei die Stoßverbindung überlappende, sich verjüngende Teile der magnetoresistiven Schicht und der Vormagnetisierungsschicht enthält.

12. Ein magnetoresistiver Lesewandler 30 nach Anspruch 11, bei dem die Länge der überlappenden Verbindung 87 zwischen dem Dreifachen und dem Fünffachen der Dicke der magnetoresistiven Schicht beträgt.

13. Ein magnetoresistiver Lesewandler 30 nach Anspruch 11 oder 12, bei dem die überlappenden, sich verjüngenden Teile eine kontinuierliche, gekrümmte Oberfläche bilden.

14. Ein magnetoresistiver Lesewandler 30 nach Anspruch 11 bis 13, bei dem die magnetoresistive Schicht aus einer Legierung aus Nickel-Eisen besteht.

15. Ein magnetoresistiver Lesewandler 30 nach Anspruch 11 bis 14, bei dem das antiferromagnetische Material 75 aus der Gruppe, die aus den Legierungen von Mangan-Eisen und Mangan-Nickel besteht, ausgewählt ist, und das ferromagnetische Material 79 aus Nickel-Eisen besteht.

16. Ein magnetoresistiver Lesewandler 30 nach Anspruch 11 bis 15, der außerdem eine Schicht aus weichmagnetischem Material 85 enthält, die von der magnetoresistiven Schicht getrennt ist, um zumindest in einem Teil des aktiven Zentralbereichs 33 ein quer ausgerichtetes Vormagnetisierungsfeld zu erzeugen.

17. Ein magnetoresistiver Lesewandler 30 nach Anspruch 16, bei dem das weichmagnetische Material 85 aus einer Legierung von Nickel-Eisen-Rhodium besteht.

18. Ein Magnetspeichersystem, bestehend aus:
einem magnetischen Speichermedium 12 mit mehreren Spuren zum Aufzeichnen von Daten;
einem magnetoresistiven Lesewandler 30, der während der Relativbewegung zwischen dem magnetoresistiven Lesewandler und dem magnetischen Speichermedium in einem geringen Abstand zum magnetischen Speichermedium gehalten wird;
mit dem magnetoresistiven Lesewandler verbundenen Stellmitteln 19, um den magnetoresistiven Lesewandler auf ausgewählte Spuren auf dem magnetischen Speichermedium zu bewegen;
und mit dem magnetoresistiven Lesewandler verbundene Erkennungsmittel 25 zur Erkennung von Widerstandsänderungen im magnetoresistiven Material als Reaktion auf Magnetfelder, die auf dem magnetischen Aufzeichnungsmedium aufgezeichnete Datenbits darstellen und vom magnetoresistiven Lesewandler erkannt werden;
wobei der magnetoresistive Lesewandler ein Lesewandler nach Anspruch 11 bis 17 ist.

## Revendications

1. Un procédé de fabrication d'un transducteur de lecture magnétorésistif (30) ayant des zones d'extrémité (37) séparées par une zone active centrale (33), le procédé comprenant les étapes consistant à :
déposer sur un substrat (40) une couche magnétorésistive de matériau ferromagnétique (31), sur au moins la zone centrale active dudit transducteur ;
former un cliché-pochoir (41) couvrant ladite zone active centrale dudit transducteur ;
éliminer par morsure la partie de ladite couche magnétorésistive non couverte par ledit cliché-pochoir, pour former un élément magnétorésistif s'étendant sur ladite zone active centrale dudit transducteur ;
déposer une deuxième couche (79) de matériau ferromagnétique sur des zones dudit transducteur non couvertes par ledit cliché-pochoir ; et
déposer une couche de matériau antiferromagnétique (75) sur des zones dudit transducteur non couvertes par ledit cliché-pochoir, ladite couche de matériau antiferromagnétique recouvrant et étant mise en contact avec ladite deuxième couche de matériau ferromagnétique, lesdites couches de matériau antiferromagnétique et ferromagnétique formant une couche de polarisation, couplée en échange, s'étendant sur lesdites zones d'extrémité dudit transducteur ;
éliminer ledit cliché-pochoir (41) couvrant ladite zone active centrale,
ladite couche de polarisation couplée en échange se trouvant dans chacune desdites zones d'extrémité formant une jonction d'about (87) avec une extrémité dudit élément magnétorésistif, et produisant un champ de polarisation magnétique longitudinal dans ledit transducteur ; et
dans lequel ladite jonction d'about est constituée de parties effilées, se chevauchant, dudit élément magnétorésistif et de ladite couche de polarisation.

2. Un procédé selon la revendication 1, dans lequel la longueur de ladite jonction à chevauchement (87) est dans la plage d'environ trois à cinq fois l'épaisseur dudit élément magnétorésistif.

3. Un procédé selon l'une quelconque des revendications 1 à 2, dans lequel ladite étape de morsure comprend l'utilisation d'un procédé de morsure directionnel.

4. Un procédé selon la revendication 3, dans lequel ledit procédé de morsure directionnel comprend un fraisage par faisceau d'ions.

5. Un procédé selon la revendication 3 ou la revendication 4, dans lequel ledit procédé de morsure directionnel est mis en oeuvre sous un certain angle par rapport audit transducteur (30).

6. Un procédé selon la revendication 5, dans lequel ledit angle est situé dans la plage d'environ soixante-dix à quatre-vingt degrés.

7. Un procédé selon la revendication 5 ou la revendication 6, dans lequel ledit transducteur (30) est tourné dans un plan perpendiculaire par rapport audit angle, durant ladite étape de morsure.

8. Un procédé selon l'une quelconque des revendications précédentes, dans lequel ledit cliché-pochoir (41) est constitué d'un matériau photoresist ayant une sous-couche (54) mince et une couche d'imagerie (53) épaisse, recouvrant ladite sous-couche mince.

9. Un procédé selon la revendication 8, dans lequel ladite sous-couche (54) est dotée d'une contre-dépouille.

10. Un procédé selon l'une quelconque des revendications précédentes, comprenant en outre l'étape consistant à déposer une couche d'un matériau magnétiquement doux (85), espacée dudit élément magnétorésistif, pour produire un champ de polarisation magnétique transversal en au moins une partie de ladite zone active centrale (33).

11. Un transducteur de lecture magnétorésistif (30) ayant des zones d'extrémité (37) séparées par une zone active centrale (33), le transducteur comprenant une couche magnétorésistive (31) en matériau ferromagnétique s'étendant sur sensiblement seulement ladite zone active centrale ;
une deuxième couche (79) en matériau ferromagnétique s'étendant sur sensiblement seulement lesdites zones d'extrémité dudit transducteur ; et
une couche de matériau antiferromagnétique (75) recouvrant et mise en contact avec ladite deuxième couche de matériau ferromagnétique, lesdites couches de matériau antiferromagnétique et ferromagnétique formant une couche de polarisation à échange de couplage, sur lesdites zones d'extrémité dudit transducteur ;
ladite couche de polarisation à échange de couplage, dans chacune desdites zones d'extrémité, formant une jonction d'about (87) avec une extrémité de ladite couche magnétorésistive, et produisant un champ de polarisation magnétique longitudinal dans ledit transducteur ; et
ladite jonction d'about comprenant des zones effilées se chevauchant de ladite couche magnétorésistive et de ladite couche de polarisation.

12. Un transducteur de lecture magnétorésistif (30) selon la revendication 11, dans lequel la longueur de ladite jonction à chevauchement (87) se trouve dans la plage d'environ trois à cinq fois l'épaisseur de ladite couche magnétorésistive.

13. Un transducteur de lecture magnétorésistif (30) selon la revendication 11 ou la revendication 12, dans lequel lesdites parties effilées se chevauchant comprennent une surface incurvée continue.

14. Un transducteur de lecture magnétorésistif (30) selon l'une quelconque des revendications 11 à 13, dans lequel ladite couche magnétorésistive est constituée d'un alliage de nickel-fer.

15. Un transducteur de lecture magnétorésistif (30) selon l'une quelconque des revendications 11 à 14, dans lequel ledit matériau antiferromagnétique (75) est sélectionné dans le groupe constitué des alliages manganèse-fer et manganèse-nickel, et ledit matériau ferromagnétique (79) est constitué de nickel-fer.

16. Un transducteur de lecture magnétorésistif (30) selon l'une quelconque des revendications 11 à 15, comprenant en outre une couche de matériau magnétiquement doux (85) espacée de ladite couche magnétorésistive, pour produire un champ de polarisation magnétique transversal en au moins une partie de ladite zone active centrale (33).

17. Un transducteur de lecture magnétorésistif (30) selon la revendication 16, dans lequel ledit matériau magnétiquement doux (85) est constitué d'un alliage nickel-fer-rhodium.

18. Un système de stockage magnétique comprenant :
un milieu de stockage magnétique (12) ayant une pluralité de pistes destinées à enregistrer des données ;
un transducteur de lecture magnétorésistif (30), maintenu en une position espacée intimement par rapport audit milieu de stockage magnétique, durant le déplacement relatif entre ledit transducteur de lecture magnétorésistif et ledit milieu de stockage magnétique ;
des moyens actionneurs (19) couplés audit transducteur de lecture magnétorésistif, pour déplacer ledit transducteur de lecture magnétorésistif sur des pistes sélectionnées se trouvant sur ledit milieu de stockage magnétique ; et
des moyens de détection (25) couplés audit transducteur de lecture magnétorésistif, pour détecter des fluctuations de résistance se manifestant dans le matériau magnétorésistif, en réponse à des champs magnétiques représentatifs de bits de données enregistrés dans ledit milieu de stockage magnétique, interceptés par ledit transducteur magnétorésistif ;
dans lequel le transducteur de lecture magnétorésistif est un transducteur tel qu'indiqué selon l'une quelconque des revendications 11 à 17.
